# EUROPEAN PATENT APPLICATION

(11) **EP 3 563 921 A1**
(43) Date of publication of application: **06.11.2019**
(21) Application number: 17888617.2
(22) Date of filing: 27.12.2017
(51) Int. Cl.: B01D 39/14, B01J 20/28, C01F 7/00, D06M 11/36

(54) **LAYERED DOUBLE HYDROXIDE MOLDED BODY AND METHOD FOR MANUFACTURING SAME**

(30) Priority: 27.12.2016 JP 2016253377; 27.12.2016 JP 2016253378
(71) Applicant: JDC Corporation, Tokyo 107-8466 (JP)
(72) Inventor: OHNO Mutsuhiro, Tokyo 107-8466 (JP); KOBAYASHI Yutaka, Tokyo 107-8466 (JP); ASAKURA Takeo, Tokyo 107-8466 (JP)
(74) Representative: Ishiguro, Masaoki
(86) International application number: PCT/JP2017/046945
(87) International publication number: WO 2018/124192

(57) **Abstract**

An object of the present invention is to provide a method for producing a layered double hydroxide compact, wherein the method can achieve production thereof at a lower cost for a short time by simplifying a process for producing a layered double hydroxide compact, and also can maintain a desired shape. The method for producing a layered double hydroxide compact of the present invention is characterized by having: a synthesis step of synthesizing a layered double hydroxide; a forming step of holding the layered double hydroxide after the synthesis step to a holding material; and a drying step of drying the layered double hydroxide held to the holding material until the water content thereof becomes equal to or lower than 30%.

## Description

### Technical Field

This invention relates to a layered double hydroxide compact and a method for producing the same.

### Background Art

Layered double hydroxides such as hydrotalcite have a structure in which various ions, molecules, or the like can be inserted between layers, and can express an anion exchange performance. Therefore, layered double hydroxides have been used for an adsorbent to adsorb and remove e.g. hazardous substances, and the like.

Conventionally, a layered double hydroxide has been used as a powder or grain for these uses and moreover as a compact obtained by forming a layered double hydroxide. Here, for example, a method in which a layered double hydroxide of only a powder or obtained by mixing a powder with e.g. a binder is formed by pressure (see e.g. Patent Literature 1) is known as a method for producing a layered double hydroxide compact.

### Citation List

### Patent Literature

Patent Literature 1: JP 4709498 B2

### Summary of Invention

### Technical Problem

However, when producing a layered double hydroxide compact, two steps have been required: the step of producing a layered double hydroxide powder by removing moisture from a layered double hydroxide suspension, and the step of forming a desired compact using the powder.

Therefore, the conventional production of a layered double hydroxide compact has had problems in that a process thereof is complicated and also cost and time are required. In addition, a layered double hydroxide compact obtained by simply forming a powder by e.g. pressure forming has had problems in that its shape is easily destroyed, and adsorption ability decreases because, when using e.g. a binder, the amount of layered double hydroxide per unit weight is reduced.

Therefore, an obj ect of the present invention is to provide a method for producing a layered double hydroxide compact, wherein the method can achieve production thereof at a lower cost for a short time by simplifying a process for producing a layered double hydroxide compact, and also can maintain a desired shape.

### Solution to Problem

In order to achieve the above-mentioned object, the method for producing a layered double hydroxide compact of the present invention is characterized by having: a synthesis step of synthesizing a layered double hydroxide; a forming step of holding the layered double hydroxide after the above synthesis step to a holding material; and a drying step of drying the layered double hydroxide held to the above holding material until the water content thereof becomes equal to or lower than 30%.

In this case, it is preferred that the above forming step be to hold the layered double hydroxide after the synthesis step to a holding material before the water content thereof becomes equal to or lower than 50%.

In addition, it is preferred that a moisture removal step of removing moisture by applying pressure to the above layered double hydroxide until the water content thereof becomes equal to lower than 70% be carried out before the above drying step.

In addition, it is preferred that the above drying step be to dry the above layered double hydroxide held to the above holding material under conditions at which the temperature is equal to or higher than 90°C and equal to or lower than 110°C and the humidity is equal to or higher than 90%.

In addition, in the above forming step, a container-shaped holding material having a filtration material in at least part thereof is filled with a suspension including the above layered double hydroxide, and the above layered double hydroxide and moisture can be separated by the filtration material.

In addition, as another method for the above forming step, the above layered double hydroxide may be supported on a fibrous holding material. In this case, an absorbent fiber or a water absorbent polymer can be used as the holding material.

A functional material mixing step of mixing the above layered double hydroxide with a functional material having a predetermined function may be carried out before the above drying step. In this case, a suspension including a layered double hydroxide created in the above synthesis step is only needed to be mixed with a functional material.

In addition, the layered double hydroxide compact of the present invention is characterized by including a layered double hydroxide, and a container-shaped holding material, which has a filtration material in at least part thereof and holds the above layered double hydroxide.

In addition, another layered double hydroxide compact of the present invention is characterized by including a layered double hydroxide, and a holding material including an absorbent fiber or an absorbent polymer, which holds the above layered double hydroxide.

In these cases, the layered double hydroxide compact may be produced by the above-described production method of the present invention.

### Advantageous Effects of Invention

According to the present invention, after the synthesis of a layered double hydroxide, the layered double hydroxide is held to a holding material before drying, and accordingly the steps of producing and forming the layered double hydroxide can be carried out at the same time. In addition, the present invention has effects in which the shape of a layered double hydroxide compact is not easily destroyed because of being held to a holding material and the layered double hydroxide compact is easily transported and handled.

### Brief Description of Drawings

Fig. 1 is an illustrative drawing to illustrate the forming step in the method for producing a layered double hydroxide compact of the present invention.
Fig. 2 is a partially exploded perspective view which shows the layered double hydroxide compact of the present invention.
Fig. 3(A) is a side view and Fig. 3(B) is a plan view, Fig. 3 (A) and Fig. 3(B) showing another layered double hydroxide compact of the present invention.
Fig. 4 is a side view which shows yet another layered double hydroxide compact of the present invention.

### Best Mode for Carrying Out the Invention

The method for producing a layered double hydroxide compact of the present invention has mainly a synthesis step of synthesizing a layered double hydroxide; a forming step of holding the layered double hydroxide after the synthesis step to a holding material; a drying step of drying the layered double hydroxide held to the holding material. Of course, the present invention may include steps other than these as needed. The water content indicates the mass of water with respect to the whole mass of layered double hydroxide including moisture in the present application. The mass of moisture included in a layered double hydroxide is measured in accordance with Japanese Industrial Standards "Test method for water content of soils" (JIS A 1203: 1999).

Here, the layered double hydroxide is a non-stoichiometric compound represented by the general formula M²⁺₁₋ₓM³⁺ₓ(OH)₂(Aⁿ⁻)_{x/n}•mH₂O (wherein M²⁺ is a divalent metal ion, M³⁺ is a trivalent metal ion, Aⁿ⁻ is a n-valent anion, 0 < x < 1, m > 0), and can be also referred to as a hydrotalcite-like compound. Examples of the divalent metal ion (M²⁺) include Mg²⁺, Fe²⁺, Zn²⁺, Ca²⁺, Li²⁺, Ni²⁺, Co²⁺, Cu²⁺ and the like. In addition, examples of the trivalent metal ion (M³⁺) include Al³⁺, Fe³⁺, Cr³⁺, Mn³⁺ and the like. In addition, examples of the anion (Aⁿ⁻) include ClO₄⁻, CO₃²⁻, HCO₃⁻, PO₄³⁻, SO₄²⁻, SiO₄⁴⁻, OH⁻, Cl⁻, NO₂⁻, NO₃⁻ and the like.

Specifically, there are Mg²⁺₁₋ₓAl³⁺ₓ(OH)₂(Aⁿ⁻)_{x/n}•mH₂O (Mg-Al type) in which the divalent metal ion (M²⁺) is Mg²⁺ and the trivalent metal ion (M³⁺) is Al³⁺, Mg²⁺₁₋ₓFe³⁺ₓ(OH)₂(Aⁿ⁻)_{x/n}•mH₂O (Mg-Fe type) in which the divalent metal ion (M²⁺) is Mg²⁺ and the trivalent metal ion (M³⁺) is Fe³⁺, Fe²⁺_{1-X}Fe³⁺ₓ(OH)₂(Aⁿ⁻)_{x/n}•mH₂O (Fe-Fe type) in which the divalent metal ion (M²⁺) is Fe²⁺ and the trivalent metal ion (M³⁺) is Fe³⁺, and the like.

The layered double hydroxide synthesized by the synthesis step of the present invention may include any ion as the divalent metal ion (M²⁺), trivalent metal ion (M³⁺), and anion (Aⁿ⁻). In addition, in the layered double hydroxide, hydroxide layer sheets may be laminated in the form of a rhombohedral crystal structure or a hexagonal crystal structure. As the synthesis method a conventionally known method can be used as long as a suspension including a layered double hydroxide can be obtained at the time of the synthesis step. For example, a layered double hydroxide represented by the general formula Mg²⁺₁₋ₓAl³⁺ₓ(OH)₂(Aⁿ⁻)_{x/n}•mH₂O (Aⁿ⁻ is an n-valent anion, 0 < x < 1, m > 0) can be synthesized in a method described below.

First, an alkaline solution, and an acid solution including aluminum ion and magnesium ion are each prepared.

The alkali included in the alkaline solution is not particularly limited as long as it makes an aqueous solution alkaline. For example, sodium hydroxide, calcium hydroxide or the like can be used. In addition, sodium carbonate, potassium carbonate, ammonium carbonate, ammonia water, sodium borate, potassium borate or the like can be also used. These can be used individually or two or more of these can be used in combination . An alkaline solution prepared to pH 8 to 14 can be used, and an alkaline solution prepared to pH 8 to 11 is preferably used.

In addition, the aluminum source for aluminum ion in an acid solution can be one which provides aluminum ion in water, and is not limited to a specific substance. For example, alumina, sodium aluminate, aluminum hydroxide, aluminum chloride, aluminum nitrate, bauxite, alumina production residues from bauxite, aluminum sludge and the like can be used. In addition, these aluminum sources can be used individually or two or more sources can be used in combination.

In addition, the magnesium source for magnesium ion in an acid solution can be one which provides magnesium ion in water, and is not limited to a specific substance. For example, brucite, magnesium hydroxide, magnesite, a magnesite baked substance and the like can be used. These magnesium sources can be used individually or two or more sources can be used in combination.

It is not required that an aluminum compound as the above aluminum source and a magnesium compound as the magnesium source be completely dissolved as long as aluminum ion and magnesium ion exist in the above acid solution.

In addition, it is known that a highly crystalline layered double hydroxide represented by Mg²⁺₁₋ₓAl³⁺ₓ(OH)₂(Aⁿ⁻)_{x/n}•mH₂O has a mole ratio of aluminum ion and magnesium ion of 1 : 3 (x = 0.25). Therefore, the mole ratio of aluminum ion and magnesium ion in an acid solution is preferably from 1 : 5 to 1 : 2. When the ratio is within this range, a layered double hydroxide can be produced advantageously in view of the material balance without wasting an aluminum source and a magnesium source.

The acid included in an acid solution is not particularly limited as long as it acidifies an aqueous solution. For example, nitric acid and hydrochloric acid can be used.

Next, the above acid solution including aluminum ion and magnesium ion, and the alkaline solution including an alkali are mixed in a predetermined proportion. A layered double hydroxide is thus synthesized, and a suspension including the layered double hydroxide is created. The mixing can be carried out by adding an acid solution to an alkaline solution at once and mixing the obtained mixture, or adding dropwise an acid solution to an alkaline solution, and a method other than these can be also used.

When aging is not carried out after the mixing of the acid solution and the alkaline solution is completed, layered double hydroxide crystals are not grown, and a suspension including a layered double hydroxide with a small crystallite size can be produced.

As the method for not carrying out aging, there is a method in which after the mixing of an acid solution and an alkaline solution is completed, the pH of the mixed liquid is reduced until the crystal growth of a layered double hydroxide stops. In a case of a layered double hydroxide represented by the general formula Mg²⁺₁₋ₓAl³⁺ₓ(OH)₂(Aⁿ⁻)_{x/n}•mH₂O, for example, pH is only needed to be equal to or lower than 9. Specifically, dilution with water is carried out within 120 minutes, preferably 60 minutes after the mixing of an acid solution and an alkaline solution is completed, and more preferably at the same time as the mixing, and thereby a suspension including a layered double hydroxide with a crystallite size of equal to or smaller than 20 nm can be obtained.

A case where aluminum ion and magnesium ion are included in an acid solution is described in the above-mentioned description. It should be noted, however, that the present invention is not limited thereto, and a case where aluminum ion is included in an acid solution and magnesium ion is included in an alkaline solution, a case where magnesium ion is included in an acid solution and aluminum ion is included in an alkaline solution, or a case where both aluminum ion and magnesium ion are included in an alkaline solution can be used.

A suspension including a layered double hydroxide created by the synthesis step of the layered double hydroxide is directly used in the forming step or used after adjusting its concentration and viscosity. The concentration and viscosity may be adjusted by any method. For example, the suspension can be used after the moisture removal step of removing moisture by applying pressure to the layered double hydroxide until the water content thereof becomes equal to or lower than 70%, preferably equal to or lower than 65%, and further preferably equal to or lower than 60%. In order to remove moisture, for example, compression separation using e.g. filter pressing, suction filtration, centrifugation or the like may be used. The pressure applied in the moisture removal step is not limited, and may be for example equal to or higher than 0.9 MPa.

The forming step is to hold a layered double hydroxide after the synthesis step to a holding material. Therefore, forming can be completed in the steps from the synthesis to drying of the layered double hydroxide, and it is possible to attempt to improve cost and throughput. Here, it is preferred that a layered double hydroxide to be held to a holding material be held to the holding material before the water content thereof becomes equal to lower than 50%, and preferably equal to or lower than 60%.

As the shape of the holding material, there are a container-shaped one which can be filled with a layered double hydroxide, and a fibrous one on which a layered double hydroxide can be supported. In addition, one in which a fibrous holding material is placed in the inner part of a container-shaped holding material may be used.

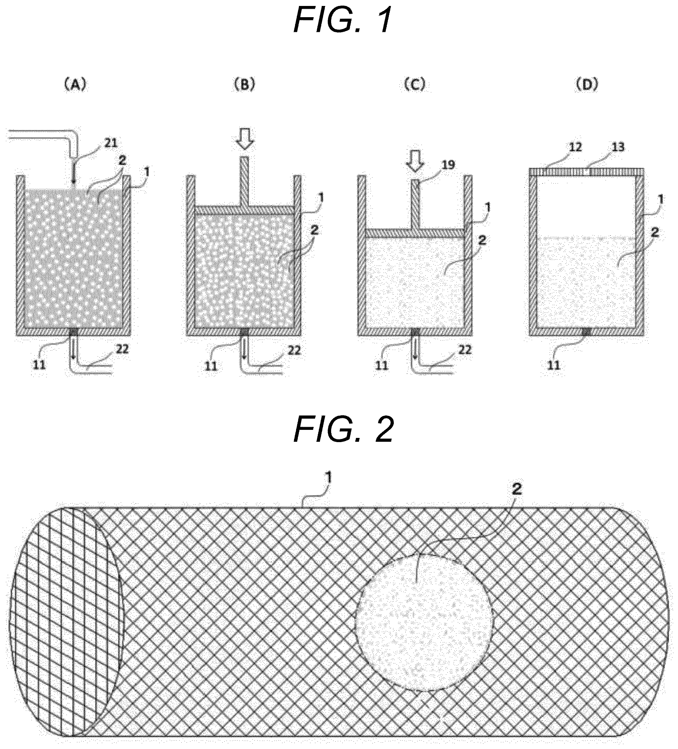

The container-shaped holding material 1 corresponds to a box-shaped one which can include a layered double hydroxide 2 in the inner part thereof as shown in Fig. 1(D), and a net-shaped one which can include a layered double hydroxide 2 in the inner part thereof as shown in Fig. 2. In this case, the inner part of the container may be divided into some spaces (chambers) to prevent a filled layered double hydroxide from moving after drying.

Any container material may be used as long as the shape of a layered double hydroxide compact can be maintained. For example, those which are made of e.g. various types of fiber, paper, plastic, glass and metal, and the like can be used.

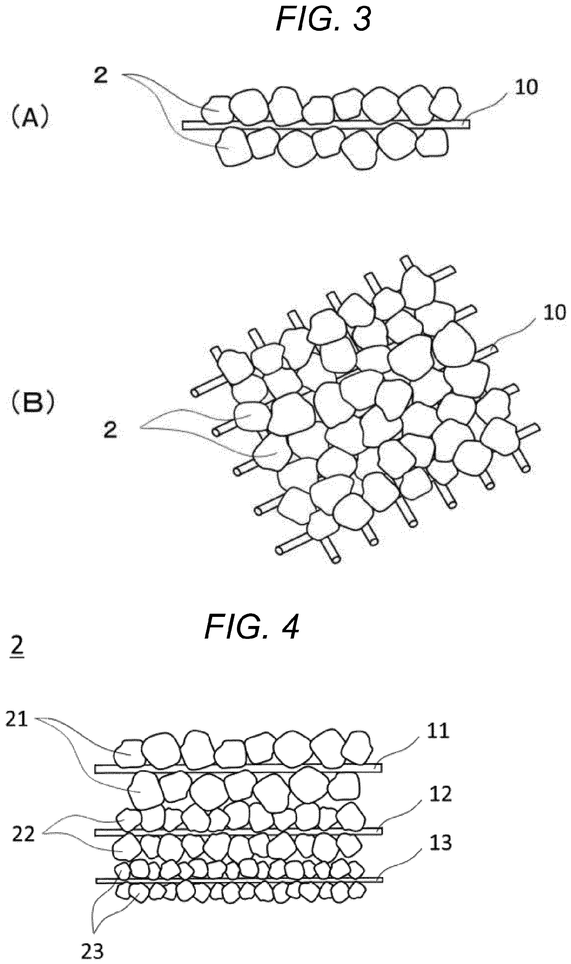

In addition, as the fibrous holding material 10, there are a woven fabric and a non-woven fabric having a two or three dimensional mesh as shown in Fig. 3, and the like. The fiber maybe either a natural fiber or a chemical fiber. As the natural fiber, for example, animal fibers such as silk, feather and animal hair, plant fibers such as cotton and linen, mineral fibers such as asbestos can be used. As the chemical fiber, regenerated fibers such as rayon and cupro, semisynthetic fibers such as acetate and triacetate, synthetic fibers such as nylon, vinylon, vinylidene, polyvinyl chloride, polyester, acrylic, polyethylene, polypropylene, REXE success and polyurethane, inorganic fibers such as metallic fiber, carbon fiber, silicate fiber and refined fiber can be used.

In addition, a water absorbent fiber and a water absorbent polymer can be used. In this case, the water absorbent fiber and water absorbent polymer adsorb a layered double hydroxide when absorbing moisture included in the layered double hydroxide, and thus easily hold the layered double hydroxide . In addition, the drying time in the drying step described below can be reduced. Furthermore, because the water absorbent polymer holds water in use, the contact time of water and a layered double hydroxide can be obtained, and ion exchange can be surely carried out.

When the container-shaped holding material 1 is used, the container-shaped holding material 1 can be filled with the layered double hydroxide 2 after the concentration and viscosity of the layered double hydroxide 2 are optionally adjusted.

In addition, a container-shaped holding material 1 having a filtration material 11 in at least part thereof, which filtration material can separate a layered double hydroxide and a liquid, can be used as shown in Fig. 1(A). In this case, a suspension 21 including the layered double hydroxide 2 obtained at the time of synthesis is put into the holding material 1, and the layered double hydroxide 2 and moisture 22 can be separated by the filtration material 11. In addition, a moisture removal step of removing moisture by applying pressure to the layered double hydroxide by e.g. a piston 19 until the water content thereof becomes equal to or lower than 70%, preferably equal to or lower than 65%, and further preferably equal to or lower than 60% may be carried out as shown in Figs. 1(B) and (C). At this time, a piston-shaped container is preferably used because pressure is easily applied. The pressure applied in the moisture removal step is not particularly limited, and may be for example equal to or higher than 0.9 MPa.

Any filtration material can be used as long as a layered double hydroxide and water can be separated. For example, a woven fabric and a non-woven fabric, filter paper, a metal mesh and the like having holes smaller than the crystal size of a layered double hydroxide can be used. In addition, of course, the filtration material can be one which forms a whole holding material. In addition, the cover 12 can be placed on the holding material after the moisture removal step as shown in Fig. 1 (D) . In this case, the cover 12 may have a supply port 13 to inject e.g. polluted water. In addition, the supply port 13 may further have a filtration material to separate a layered double hydroxide and a liquid.

When a layered double hydroxide is supported on a fibrous holding material, a suspension including a layered double hydroxide obtained at the time of synthesis, and a layered double hydroxide having the adjusted concentration and viscosity may be supported on the holding material by impregnation or application. The supported material of layered double hydroxide on the holding material can be adjusted by adjusting the concentration and viscosity.

In addition, a container with a desired shape may be filled with a holding material and a layered double hydroxide. After this, a moisture removal step of removing moisture by applying pressure to the layered double hydroxide until the water content thereof becomes equal to or lower than 70%, preferably equal to or lower than 65%, and further preferably equal to or lower than 60% may be also carried out. In this case, the pressure applied in the moisture removal step is not limited, and may be for example equal to or higher than 0.9 MPa.

In addition, when a fibrous holding material 10 is used, the crude density of a layered double hydroxide is adjusted by changing the size of mesh and the amount of layered double hydroxide supported, and a filter body having any aeration properties and water flow properties can be created. For example, a filter body with small filtration resistance can be formed by reducing the mesh size from the upper portion to the lower portion. Specifically, a holding material with two dimensional meshes as shown in Fig. 4 may be formed by laminating fibrous holding materials in the order from larger to smaller mesh sizes .

The drying step is a step of drying a layered double hydroxide supported on a holding material. In the drying step, it is preferred that the water content be at least equal to or lower than 30%. Drying and baking can be also carried out until crystalline water in a layered double hydroxide is removed.

When a layered double hydroxide compact is used in a solution, the water content after the drying step is equal to or higher than 10% and equal to or lower than 20%, preferably equal to or higher than 10% and equal to or lower than 15%, and further preferably equal to or higher than 11% and equal to or lower than 12% considering the shape stability of the layered double hydroxide compact. As the reason why the water content is retained to equal to or higher than 10%, when the water content is lower than 10%, a layered double hydroxide absorbs moisture by the contact with e.g. a solution to dramatically increase the volume, and the shape and particle size cannot be retained.

As drying, moisture may be vaporized by adjusting temperature, humidity, and pressure. Examples thereof include a method in which air in room is heated, a method in which pressure is reduced, a method carried out under an atmosphere of e.g. nitrogen gas, and the like. Of course, natural drying may be carried out at room temperature. In addition, drying may be carried out after the moisture removal step as described above.

In addition, it is preferred that a layered double hydroxide held to a holding material be dried under conditions at which the temperature is equal to or higher than 90°C and equal to or lower than 110°C and the humidity is equal to or higher than 90% considering the shape stability of a layered double hydroxide compact.

A functional material mixing step of mixing a layered double hydroxide with a functional material having a predetermined function may be carried out before the drying step . The functional materials correspond to those having a deodorizing function, those having an antibacterial/antiviral function, those having an adsorption function, and the like.

As the functional material having a deodorizing function, for example, a metal, anion, or a compound of e.g. copper, silver, gold, lead, platinum, nickel, aluminum, tin, zinc, cobalt, nickel, manganese or titanium can be used. Here, the compound includes an inorganic acid salt, an organic acid salt, an oxide or a complex. Examples of the copper compound include copper sulfate, copper nitrate, copper(I) chloride, copper(II) chloride, copper(I) bromide, copper(II) bromide, copper(I) iodide, copper(II) iodide, copper(I) acetate, copper (II) acetate, copper carbonate, copper oleate, copper naphthenate, copper (I) oxide, copper (II) oxide, copper chlorophyll, copper phthalocyanine, and the like.

As the functional material having an antiviral function, for example, an atom, an ion, or a compound of metal such as copper, silver, gold, lead, platinum, nickel, aluminum, tin, zinc, cobalt, nickel, manganese or titanium can be used. Here, the compound includes an inorganic acid salt, an organic acid salt, an oxide or a complex. Examples of the copper compound include copper sulfate, copper nitrate, copper(I) chloride, copper(II) chloride, copper(I) bromide, copper(II) bromide, copper(I) iodide, copper(II) iodide, copper(I) acetate, copper(II) acetate, copper carbonate, copper oleate, copper naphthenate, copper(I) oxide, copper(II) oxide, copper chlorophyll, copper phthalocyanine, and the like.

Examples of the functional material having an adsorption function include porous bodies such as activated carbon and zeolite.

In addition, a carrier of a layered double hydroxide may be included as a functional material. The carrier is not particularly limited as long as it is a substance or material which can be impregnated with a layered double hydroxide. Examples thereof include a fiber, a non-woven fabric, activated carbon, zeolite, metal, silica and the like. By using a carrier, a layered double hydroxide compact in which the carriers are scattered is complicatedly linked to the carriers impregnated with a layered double hydroxide. A fine void portion between the carriers is thus formed. Therefore, when a layered double hydroxide compact is used as e.g. a filter body, clogging due to a layered double hydroxide gathering together can be prevented.

Furthermore, for example, a chloride such as NaCl created in the process of synthesizing a layered double hydroxide may be included.

The layered double hydroxide compact of the present invention thus produced is characterized by including a container-shaped holding material, which has a filtration material in at least part thereof and holds the above layered double hydroxide.

In addition, another layered double hydroxide compact of the present invention is characterized by including a layered double hydroxide, and a holding material including an absorbent fiber or an absorbent polymer, which holds the above layered double hydroxide.

This layered double hydroxide compact can be used for various products, and can be used for e.g. a water purifier, an oven filter, an adsorption mat to prevent an outflow of polluted substances, and the like.

### Industrial Applicability

Because the production and forming of a layered double hydroxide are carried out at the same time, a layered double hydroxide compact can be efficiently obtained. In addition, because the obtained layered double hydroxide compact is held to a holding material, the shape is not easily destroyed, and it is easy to handle, for example, to transport. Because of these effects, the invention of the present application can be applied, for example, for producing a filter body.

## Claims

1. A method for producing a layered double hydroxide compact, the method comprising:
a synthesis step of synthesizing a layered double hydroxide;
a forming step of holding the layered double hydroxide after the synthesis step to a holding material; and
a drying step of drying the layered double hydroxide held to the holding material until a water content thereof becomes equal to or lower than 30%.

2. The method for producing a layered double hydroxide compact according to claim 1, wherein the forming step is to hold the layered double hydroxide after the synthesis step to the holding material before the water content thereof becomes equal to or lower than 50%.

3. The method for producing a layered double hydroxide compact according to claim 1, the method comprising a moisture removal step of removing moisture by applying pressure to the layered double hydroxide until the water content thereof becomes equal to or lower than 70% before the drying step.

4. The method for producing a layered double hydroxide compact according to claim 3, wherein the drying step is to dry the layered double hydroxide held to the holding material under conditions at which a temperature is equal to or higher than 90 °C and equal to or lower than 110 °C, and a humidity is equal to or higher than 90%.

5. The method for producing a layered double hydroxide compact according to any one of claims 1 to 4, wherein the forming step is to separate the layered double hydroxide and moisture by filling a container-shaped holding material having a filtration material in at least part thereof with a suspension including the layered double hydroxide and using the filtration material.

6. The method for producing a layered double hydroxide compact according to any one of claims 1 to 5, wherein the forming step is to support the layered double hydroxide on a fibrous holding material.

7. The method for producing a layered double hydroxide compact according to claim 6, wherein the holding material is an absorbent fiber or a water absorbent polymer.

8. The method for producing a layered double hydroxide compact according to any one of claims 1 to 7, the method comprising a functional material mixing step of mixing the layered double hydroxide with a functional material having a predetermined function before the drying step.

9. The method for producing a layered double hydroxide compact according to any one of claims 1 to 8, the method comprising a functional material mixing step of mixing a suspension including the layered double hydroxide created in the synthesis step with a functional material.

10. A layered double hydroxide compact, comprising:
a layered double hydroxide; and
a container-shaped holding material, which has a filtration material in at least part thereof and holds the layered double hydroxide.

11. A layered double hydroxide compact, comprising:
a layered double hydroxide; and
a holding material including an absorbent fiber or an absorbent polymer, which holds the layered double hydroxide.

12. A layered double hydroxide compact, wherein the layered double hydroxide compact is produced by the production method according to claims 1 to 9.
